# FASCICULE DE BREVET EUROPEEN

(11) **EP 3 572 319 B1**
(45) Date de publication et mention de la délivrance du brevet: **10.03.2021**
(21) Numéro de dépôt: 19174149.5
(22) Date de dépôt: 13.05.2019
(51) Int. Cl.: B64C 13/04, B64C 13/14, G05G 1/36

(54) **MODULE A PEDALE MONOBLOC ET AMOVIBLE POUR PALONNIER D'AERONEF**
ENTFERNBARES MONOBLOCK-PEDALMODUL FÜR SEITENRUDERSTEUERUNG EINES LUFTFAHRZEUGS
MODULE WITH SINGLE-PIECE REMOVABLE PEDAL FOR AIRCRAFT RUDDER

(30) Priorité: 22.05.2018 FR 1854224
(43) Date de publication de la demande: 27.11.2019
(73) Titulaire: Airbus Opérations SAS, 31060 Toulouse (FR)
(72) Inventeur: GUERING, Bernard, 31850 Montrabé (FR); SAINT-MARC, Laurent, 31530 Montaigut-sur-Save (FR)
(74) Mandataire: Gevers & Orès

(56) Documents cités:
- US-A1- 2014 131 523
- US-A1- 2016 348 772
- US-A1- 2017 166 296
- US-A1- 2017 283 037

## Description

### DOMAINE TECHNIQUE

La présente invention concerne un module à pédale pour un palonnier d'un aéronef, en particulier pour un avion de transport, et un palonnier comportant au moins un tel module à pédale.

Sur un aéronef, un palonnier est un dispositif mécanique qui permet au pilote et/ou au copilote de commander la gouverne de direction et les freins des roues.

Le palonnier comprend des pédales et un ensemble de pièces mobiles qui, selon les types de mouvements qui sont appliqués aux pédales par le ou les pilotes, commandent la gouverne de direction ou les freins de l'aéronef.

### ÉTAT DE LA TECHNIQUE

Les palonniers utilisés sur les aéronefs sont principalement, sur les avions de ligne, des palonniers intégrés dans le plancher de la cabine de pilotage. Le palonnier est dit posé, car il repose sur le plancher de la cabine de pilotage.

Pour son fonctionnement, et notamment pour la mise en œuvre des fonctionnalités des pédales liées à la commande de direction et des fonctionnalités des pédales liées au freinage, le palonnier doit comprendre un grand nombre de pièces (articulations, bielles, pivots,...).

On connaît, par le document US 2014/131523 A1, un palonnier monté sur le plancher d'un aéronef et comprenant un ensemble de pédales agencé de chaque côté du palonnier. Ce palonnier comprend également un système de freinage et un système de gouvernail intégré dans un boîtier central.

On connaît également, par le document WO 2016/19107 A1, un système de gouverne monté sur un châssis lui-même fixé au plancher d'un aéronef. Le système comprend notamment une came agencée dans un boîtier et une paire d'ensembles de pédales est mécaniquement couplé à la came de sorte qu'un mouvement linéaire engendre une rotation de la came.

Un tel palonnier usuel, en raison notamment de ce nombre élevé de pièces, est complexe. Ce palonnier usuel n'est pas optimal notamment en termes d'encombrement, de masse et de coût. De plus, cette complexité, due en particulier à de nombreuses liaisons entre pièces, rend difficile des interventions et des opérations de maintenance sur les pédales et les pièces associées.

Cette solution usuelle n'est donc pas complètement satisfaisante.

### EXPOSÉ DE L'INVENTION

La présente invention concerne un module à pédale pour un palonnier d'aéronef, selon la revendication 1, ledit module à pédale comportant une pédale, le module à pédale étant destiné à être agencé sur un module central du palonnier.

Selon l'invention, ledit module à pédale est monobloc et il comporte, de plus, au moins un système de réglage intégré permettant de modifier une inclinaison neutre de la pédale, ainsi qu'un dispositif de liaison permettant de réaliser une liaison amovible dudit module à pédale.

Ainsi, grâce à l'invention, les fonctionnalités d'une pédale sont intégrées dans un seul module (dit module à pédale) qui est monobloc. Dans le cadre de la présente invention, on entend par « module monobloc » un module qui est d'un seul bloc ou unitaire (c'est-à-dire qui correspond à un seul objet).

De plus, le module à pédale peut être lié de façon amovible au reste du palonnier. On obtient ainsi un module à pédale unique, par pédale, qui peut être désolidarisé facilement du palonnier. Ceci permet de simplifier et de faciliter le remplacement de ce module à pédale et ainsi de remédier à l'inconvénient précité.

Dans un mode de réalisation préféré, ledit module à pédale comporte, de plus, un système de freinage intégré. Le module à pédale intègre ainsi l'ensemble des fonctionnalités liées à la pédale correspondante.

Avantageusement, le système de freinage comprend un capteur de position configuré pour mesurer une rotation de la pédale lors d'une action de freinage. De préférence, le capteur de position est installé dans un premier logement agencé dans une partie basse de la pédale.

Par ailleurs, de façon avantageuse, le système de réglage est apte à être commandé et il est configuré pour permettre le réglage d'un angle d'inclinaison de la pédale. Avantageusement, le système de réglage comporte, pour ce faire, un motoréducteur apte à être commandé.

Dans un mode de réalisation particulier, le système de réglage comporte, de plus, une vis apte à être mise en rotation par le motoréducteur, ladite vis agissant sur un écrou configuré pour basculer un guignol lors d'une rotation de la vis, le guignol étant pourvu d'un galet agencé de manière à être en contact d'une piste de roulement formée sur la pédale et à pousser la pédale lors d'un basculement du guignol pour modifier son inclinaison.

De préférence, le motoréducteur est installé dans un second logement agencé dans une partie basse de la pédale.

Par ailleurs, dans un mode de réalisation particulier, la pédale est pourvue d'au moins une trappe d'accès permettant d'accéder à au moins l'un des premier et second logements, ladite trappe d'accès étant agencée sur une face d'appui de la pédale, destinée à servir d'appui pour un pied d'un pilote.

Dans ce mode de réalisation particulier, le module à pédale comporte, de préférence, au moins un système d'extraction automatique configuré pour extraire automatiquement un élément (par exemple le capteur de position ou le motoréducteur) installé dans le (premier ou second) logement, à l'ouverture de la trappe d'accès de ce logement.

Par ailleurs, de façon avantageuse, le module à pédale comporte une structure porteuse monobloc creuse, sur laquelle est montée de façon rotative la pédale.

En outre, avantageusement, le module à pédale comporte un soufflet de protection agencé entre la pédale et la structure porteuse.

La présente invention concerne également un palonnier qui comporte au moins un module à pédale tel que celui spécifié ci-dessus.

Dans un mode de réalisation préféré, le palonnier comporte au moins un module central et deux modules à pédale de ce type, les modules à pédale étant agencés de part et d'autre dudit module central, chacun desdits modules à pédale étant agencé sur une face latérale associée du module central.

En outre, dans un mode de réalisation particulier, le module central est pourvu, sur chacune de ces faces latérales, de rails de guidage configurés pour coopérer avec des patins à recirculation de billes, fixés sur le module à pédale associé et faisant partie dudit dispositif de liaison.

De plus, avantageusement, le module central est pourvu, sur chacune des faces latérales, d'un bras, chacun desdits bras étant lié de façon articulée à une biellette de poussée du module à pédale correspondant, le bras et la biellette de poussée étant configurés pour assurer la transmission d'un mouvement de la pédale dudit module de pédale.

La présente invention concerne également un aéronef, en particulier un avion de transport, qui est pourvu d'au moins un module à pédale et/ou d'au moins un palonnier, tels que ceux spécifiés ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 montre une vue latérale d'un avion au sol qui comporte un palonnier selon un mode de réalisation de l'invention ;
- la figure 2 est une vue en perspective d'un palonnier en regardant de l'avant ;
- les figures 3 et 4 sont des vues en perspective, en regardant respectivement de l'arrière et de l'avant, d'un palonnier dont les modules à pédale sont séparés d'un module central ;
- la figure 5 est une figure similaire à la figure 2 avec des parois représentées en transparence, pour montrer des éléments agencés à l'intérieur du palonnier ;
- les figures 6 et 7 sont des vues en perspective montrant une pédale pourvue d'un système de freinage ;
- la figure 8 est une vue latérale schématique d'un module à pédale, permettant de montrer une inclinaison possible de la pédale associée ;
- les figures 9 et 10 sont des vues en perspective montrant les éléments principaux d'un système de réglage, monté sur une pédale représentée partiellement ;
- les figures 11 et 12 sont des vues, respectivement latérale et en perspective, d'une pédale pourvue d'un système de réglage ; et
- les figures 13 et 14 sont des vues en perspective, en regardant respectivement de l'arrière et de l'avant, montrant une pédale pourvue à la fois d'un système de freinage et d'un système de réglage.

### DESCRIPTION DÉTAILLÉE

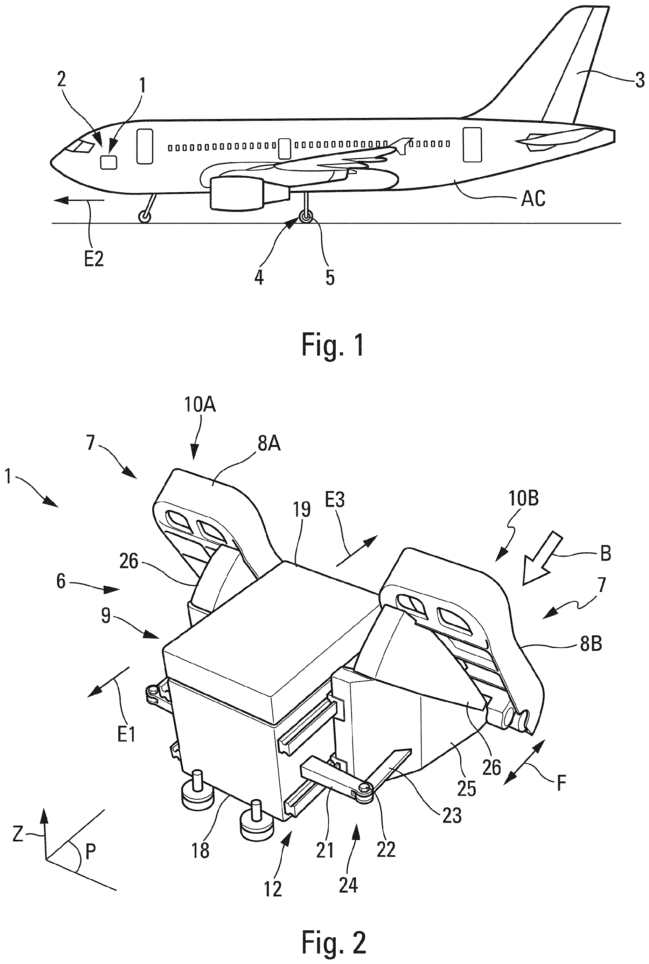

La figure 1 montre un aéronef AC, en l'occurrence un avion de transport, qui comprend une cabine de pilotage 2, dans laquelle est agencé un palonnier 1 selon l'invention (comme représenté très schématiquement sur cette figure 1). L'aéronef AC comporte également une gouverne de direction 3 et des freins 4 au niveau de roues 5 d'un train d'atterrissage principal de l'aéronef AC.

La figure 2 montre un mode de réalisation préféré du palonnier 1.

Ce palonnier 1 est destiné à être intégré dans le plancher (non représenté) de la cabine de pilotage 2 de l'aéronef AC.

Dans le cadre de la présente invention, les sens "arrière" et "avant" sont définis par rapport à la direction longitudinale de l'aéronef AC, à savoir pour "avant" (comme illustré sur la figure 2 par une flèche E1) vers l'avant de l'aéronef AC (dans le sens d'une flèche E2 sur la figure 1) dans le sens de vol (ou de déplacement) de l'aéronef AC et pour "arrière" (comme illustré sur la figure 2 par une flèche E3) vers l'arrière de l'aéronef AC dans le sens inverse au sens de vol (ou de déplacement) de l'aéronef AC.

Par ailleurs, dans le cadre de la présente description, les termes "inférieur", "supérieur", "bas" et "haut" sont définis suivant une direction verticale Z qui est orthogonale à un plan P horizontal (défini par une direction dite longitudinale et une direction dite latérale) de l'aéronef, ledit plan P étant parallèle au plancher (non représenté) de la cabine de pilotage, comme illustré sur la figure 2.

Plus précisément :
- la direction longitudinale est définie selon l'axe longitudinal de l'aéronef ;
- la direction verticale Z forme avec la direction longitudinale un plan dit vertical qui est parallèle à un plan vertical de symétrie de l'aéronef ; et
- la direction latérale est orthogonale auxdites directions longitudinale et verticale, la direction latérale formant avec la direction longitudinale le plan P qui est parallèle au plancher de la cabine de pilotage 2.

De façon usuelle, le palonnier 1 de l'aéronef AC est un organe de pilotage qui permet à un pilote de contrôler la gouverne de direction 3 (figure 1) de manière à agir sur l'axe de lacet de l'aéronef AC lors d'un vol, et également d'assurer le freinage de l'aéronef AC lorsque ce dernier est en mouvement au sol, comme précisé ci-dessous.

Le palonnier 1, qui est destiné à un avion de transport usuel, comporte un ensemble d'actionnement 6, représenté sur la figure 2, qui est susceptible d'être actionné par un pilote, par exemple le pilote principal ou un copilote de l'aéronef. Pour ce faire, le palonnier 1 comprend une paire 7 de pédales. Cette paire 7 comprend deux pédales 8A et 8B destinées à être actionnées par les deux pieds, respectivement droite et gauche, du pilote.

Pour un aéronef piloté par deux pilotes, le palonnier 1 comporte deux ensembles d'actionnement 6 tels que celui de la figure 2 par exemple, qui sont configurés, de façon usuelle, de sorte que les pédales destinées à l'un des pilotes, le copilote par exemple, sont toujours dans la même position que celles destinées à l'autre pilote, le pilote principal par exemple.

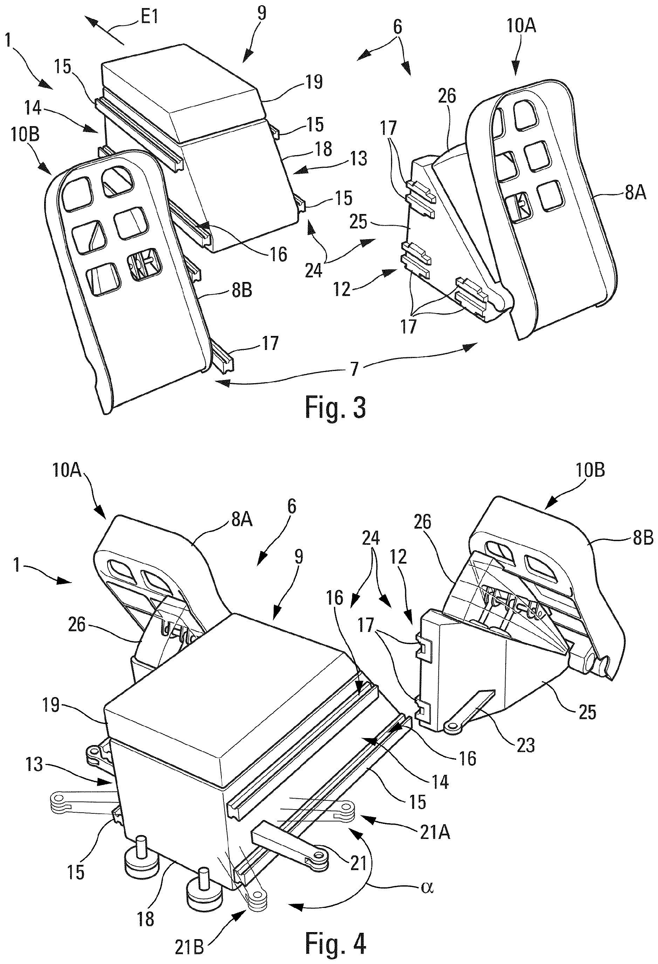

Comme représenté sur les figures 2 à 4 notamment, le palonnier 1 comporte un module central 9 et deux modules à pédale 10A et 10B, dont chacun est pourvu d'une unique pédale 8A et 8B. Les modules à pédale 10A et 10B sont agencés de part et d'autre du module central 9. Le module à pédale 10A (pourvu de la pédale 8A) est agencé sur une face latérale 13 (figure 3) du module central 9 et le module à pédale 10B (pourvu de la pédale 8B) est agencé sur une face latérale 14 du module central 9.

Selon l'invention, chacun desdits modules à pédale 10A et 10B du palonnier 1 est monobloc, c'est-à-dire qu'il est réalisé en un seul bloc et qu'il est unitaire (en correspondant à un seul objet).

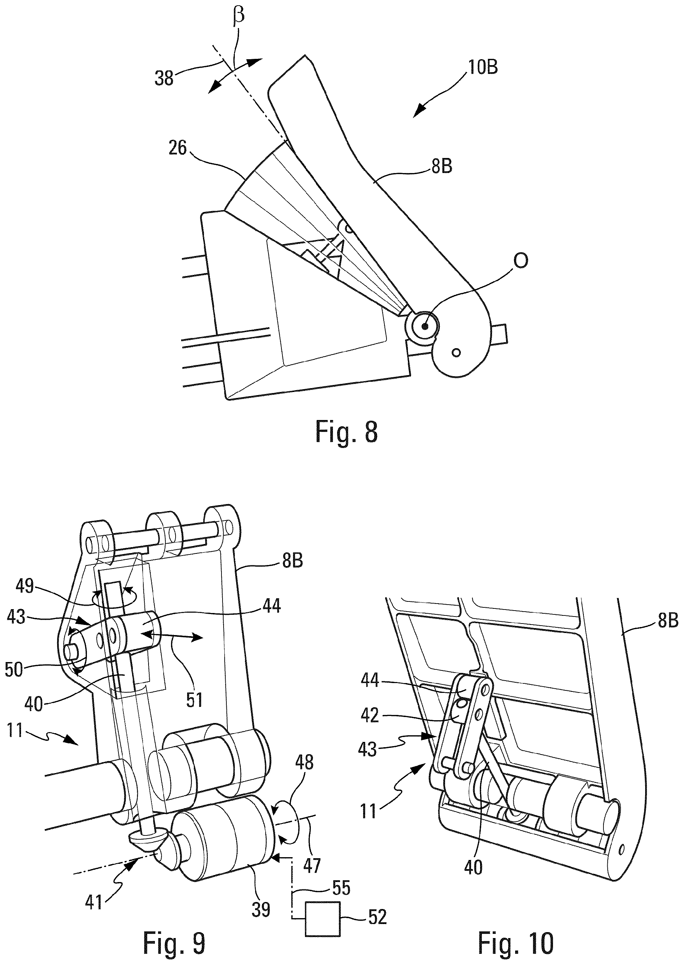

En outre, chacun desdits modules à pédale 10A et 10B comporte, en plus de la pédale 8A, 8B associée, un système de réglage 11 intégré (figures 9 à 12) précisé ci-dessous, ainsi qu'un dispositif de liaison 12 permettant de réaliser une fixation amovible dudit module à pédale 10A, 10B par rapport audit module central 9.

Ainsi, comme précisé ci-dessous, l'ensemble des fonctionnalités d'une pédale 8A, 8B sont intégrées dans un seul module (dit module à pédale 10A, 10B) qui est monobloc.

De plus, le module à pédale 10A, 10B peut être lié de façon amovible au reste du palonnier 1 et notamment au module central 9. On obtient ainsi un module à pédale 10A, 10B unique par pédale 8A, 8B, qui peut être désolidarisé facilement du palonnier 1. Ceci permet notamment de simplifier et de faciliter la manipulation et le remplacement de ce module à pédale 10A, 10B.

Dans un mode de réalisation préféré, le module central 9 est pourvu, sur chacune des faces latérales 13 et 14, de deux rails de guidage 15 (pourvus, chacun, d'un chemin de roulement 16), comme représenté notamment sur les figures 3 et 4.

Ces rails de guidage 15 sont agencés parallèlement l'un par rapport à l'autre sur chacune des faces latérales 13 et 14, l'un vers le bas et l'autre vers le haut du module central 9.

Ces rails de guidage 15 sont configurés pour coopérer avec des patins 17 à recirculation de billes. Ces patins 17 sont fixés sur le module à pédale 10A, 10B associé, et sont configurés pour pouvoir se déplacer dans les chemins de roulement 16 des rails de guidage 15. Ces patins 17 font partie dudit dispositif de liaison 12 du module à pédale 10A, 10B.

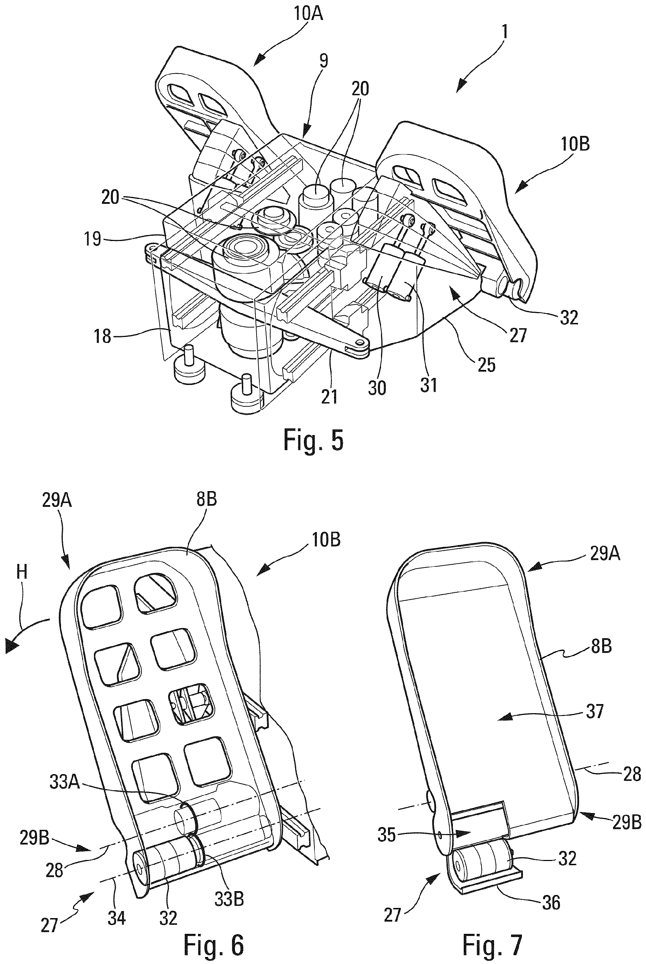

Dans un mode de réalisation particulier, représenté sur les figures 2 à 4, le module central 9 comporte un module de base 18 inférieur et un module auxiliaire 19 supérieur. Le module auxiliaire 19 (ou module électrique) est agencé, de préférence de façon amovible, sur le module de base 18. Comme représenté sur la figure 5, qui montre le module de base 18 et le module auxiliaire 19 du module central 9 en transparence, le module central 9 est pourvu d'une pluralité de composants, notamment électroniques, destinés au fonctionnement du palonnier 1 et identifiés de manière générale par des références 20 sur cette figure 5.

Par ailleurs, le module central 9 est pourvu, sur chacune des faces latérales 13 et 14, d'un bras 21 comme représenté sur les figures 2 et 4. Chacun des bras 21 est lié, de façon articulée via une vis 22 (figure 2), à une biellette de poussée 23 du module à pédale 10A, 10B correspondant. Pour chaque module à pédale 10A, 10B, le bras 21 et la biellette de poussée 23 sont configurés pour assurer la transmission d'un mouvement de la pédale dudit module de pédale 10A, 10B (dans la direction illustrée par une flèche F sur la figure 2), à l'ensemble du palonnier 1.

Grâce au système de liaison 24 formé du dispositif de liaison 12 prévu sur chaque module à pédale 10A, 10B et des rails de guidage 15 coopérant, chaque module à pédale 10A, 10B peut être déplacé (dans la direction représentée par la flèche F sur la figure 2 pour le module à pédale 10B), vers l'avant ou l'arrière, lors de l'actionnement de la pédale 8B correspondante par un pied (non représenté) d'un pilote, comme illustré par une flèche B, pour une commande de direction.

Le déplacement du module à pédale 10B dans la direction de la flèche F (figure 2), dans l'un ou l'autre sens, permet, en fonction du sens de déplacement, une rotation partielle du bras 21 (illustré par une double flèche α sur la figure 4) entre deux positions extrêmes 21A et 21B.

Le bras 21 transmet ainsi, par cette rotation partielle, le mouvement de commande de direction, généré par l'actionnement de la pédale par le pilote. Un capteur ou un dispositif mécanique transforme, de façon usuelle, la commande mécanique représentative de la rotation du bras 21, en un signal électrique. Ce signal électrique est ensuite transmis, de façon usuelle, à un système de direction (non représenté) de la gouverne de direction 3 pour commander la direction de l'aéronef AC (figure 1).

Le système de liaison 24 permet, en outre, une extraction facile et rapide du module de pédale 10A, 10B dudit module central 9 sur lequel il est monté de façon amovible.

Cette opération d'extraction peut être nécessaire, notamment pour remplacer un module à pédale 10A, 10B défectueux. Cette opération peut également être mise en œuvre pour accéder à des composants internes du module central 9, tels qu'un composant 20 (figure 5), via par exemple des trappes d'accès (non représentées) prévues sur les faces latérales 13 et 14.

Cette opération d'extraction, par exemple du module à pédale 10B, à partir de la position représentée sur la figure 2, est réalisée très simplement et rapidement, à l'aide des étapes suivantes :
- démontage de la vis 22 liant la biellette de poussée 23 du module à pédale 10B au bras 21 du module central 9 ; et
- extraction du module à pédale 10B dans le sens de la flèche E3 (figure 2) en le faisant rouler sur les rails de guidage 15 du module central 9 via les patins 17. L'extraction complète est représentée par la figure 4.

Par ailleurs, chaque module à pédale 10A, 10B comporte une structure porteuse 25, sur laquelle est montée de façon rotative la pédale 8A, 8B correspondante. Cette structure porteuse 25 assure la mobilité en rotation de la pédale 8A, 8B.

Cette structure porteuse 25 est monobloc. De plus, elle est creuse, ce qui permet notamment de réduire sa masse.

En outre, chaque module à pédale 10A, 10B est pourvu d'un soufflet de protection 26 qui est agencé entre la pédale 8A, 8B et la structure porteuse 25.

Ce soufflet de protection 26 est destiné à protéger des éléments sensibles du module à pédale 10A, 10B d'éventuelles contaminations.

Par ailleurs, dans un mode de réalisation préféré, chaque module à pédale 10A, 10B comporte, de plus, un système de freinage 27 intégré, représenté sur les figures 6 et 7 pour la pédale 8B. Le système de freinage de la pédale 8A est identique à celui décrit ci-après de la pédale 8B.

Pour une commande de freinage, la pédale 8B est montée mobile en rotation autour d'un axe de rotation 28. Cet axe de rotation 28 est situé vers le bas en direction du plancher (à proximité de l'extrémité inférieure 29B de la pédale 8B). Ainsi, lorsque le pilote appuie avec son pied sur la pédale 8B au niveau de son extrémité supérieure 29A (flèche H), la pédale 8B pivote autour de l'axe de rotation 28, et génère une action sur un vérin 30 associé (ou une bielle fonctionnelle) représenté sur la figure 5. Le système de freinage 27 comporte également un ressort 31 de ressenti d'effort, externe au vérin 30.

Le système de freinage 27 comporte, en outre, un capteur de position 32 (figure 6) qui est configuré pour mesurer la rotation de la pédale 8B lors de l'action de freinage.

Le capteur de position 32 est un capteur rotatif (inductif, résistif,...) de type multivoies, qui est configuré pour déterminer la rotation de la pédale 8B (autour de l'axe de rotation 28), pendant la phase de freinage et la transmettre à des systèmes de gestion (non représentés), comme ordre de freinage.

Pour ce faire, le système de freinage 27 comporte un engrenage 33A (représenté schématiquement et en transparence sur la figure 6) associé à l'axe de rotation 28, qui agit sur un engrenage 33B (représenté également schématiquement et en transparence sur la figure 6) générant une rotation autour d'un axe de rotation 34, mesurée par le capteur de position 32.

Par conséquent, lors de l'actionnement de la pédale 8B dans le sens illustré par la flèche H, la pédale 8B tourne autour de l'axe 28. Cette rotation transmise par l'intermédiaire de l'ensemble d'engrenages 33A et 33B coopérant est mesurée par le capteur de position 32.

Dans un mode de réalisation préféré, le capteur de position 32 est installé dans un logement 35, représenté sur la figure 7, qui est prévu dans une partie basse de la pédale 8B (extrémité 29B).

Cette position du capteur de position 32 en partie basse de la pédale 8B, permet une extraction rapide de ce composant (par l'arrière) en cas de panne de ce dernier.

Par ailleurs, dans un mode de réalisation particulier, chaque pédale, comme la pédale 8B représentée sur la figure 7, est pourvue d'une trappe d'accès 36. Cette trappe d'accès 36 permet d'accéder au logement 35. La trappe d'accès 36 est agencée sur une face arrière 37 (d'appui) de la pédale 8B, destinée à servir d'appui pour un pied d'un pilote en vue de l'actionnement de la pédale 8B.

Dans ce mode de réalisation particulier, le module à pédale 10A, 10B comporte, de préférence, un système d'extraction automatique (non représenté). Ce système d'extraction automatique est configuré pour générer une extraction automatique du capteur de position 32 installé dans le logement 35, à l'ouverture de la trappe d'accès 36 du logement 35, par exemple par l'intermédiaire d'une connexion électrique usuelle existant sur une baie (« rack » en anglais).

Ainsi dès l'ouverture de la trappe d'accès 36, le capteur de position 32 est extrait automatiquement de son logement 35, comme représenté sur la figure 7. Un opérateur n'a alors qu'à le saisir, par exemple pour le remplacer par un capteur opérationnel s'il est défectueux.

Par ailleurs, chaque module à pédale 10A, 10B du palonnier 1 comporte un système de réglage 11, comme représenté sur les figures 9 à 12. Ce système de réglage 11 est configuré pour permettre le réglage d'un angle d'inclinaison β de la pédale 8A, 8B correspondante, par rapport à une inclinaison illustrée par un axe 38 sur la figure 8, autour d'un point O.

Pour ce faire, le système de réglage 11 comporte un motoréducteur 39 apte à être commandé par une unité de commande électronique 52 (précisée ci-dessous en référence à la figure 9).

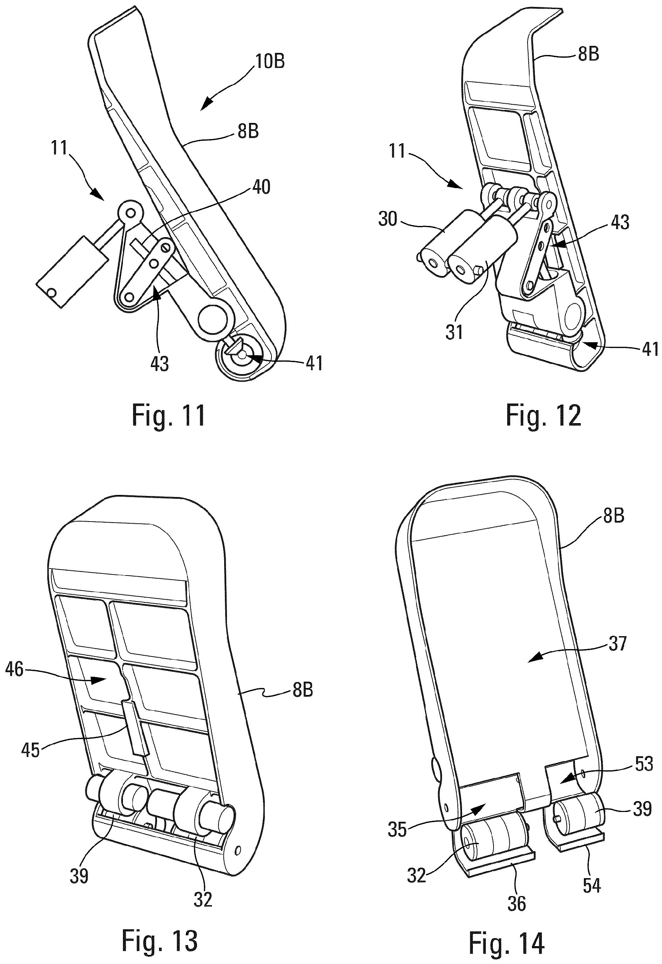

Dans un mode de réalisation particulier, représenté sur les figures 9 à 12, le système de réglage 11 comporte une vis 40 apte à être mise en rotation par le motoréducteur 39 via un engrenage 41 à renvoi d'angle. La vis 40 agit sur un écrou 42 configuré pour faire basculer un guignol 43 lors de la rotation de la vis 40. Le guignol 43 est pourvu d'un galet 44 agencé de manière à être en contact d'une piste de roulement 45 (figure 13) formée sur une face avant 46 de la pédale 8B et à pousser la pédale 8B lors d'un basculement du guignol 43 pour modifier son inclinaison.

Le système de réglage 11 comporte également des ressorts de rappel (non représentés) qui ont pour but d'assurer un contact permanent du galet 44 sur la piste de roulement 45.

Ce système de réglage 11 est, ainsi, apte à mettre en œuvre le procédé de réglage suivant :
- une commande électrique de réglage générée par un opérateur via l'unité de commande 52 sollicite le motoréducteur 39 qui est rotatif autour d'un axe 47, comme représenté sur la figure 9 et comme illustré par une double flèche 48 ;
- le motoréducteur 39 met en rotation la vis 40 via le renvoie d'angle 41, comme illustré par une double flèche 49 ;
- la vis 40 étant bloquée en partie basse, sa rotation permet le déplacement de l'écrou 42, ce qui a pour effet de faire basculer le guignol 43, comme illustré par une double flèche 50 ;
- en basculant, l'extrémité libre du guignol 43 décrit un arc de cercle, et déplace le galet 44 par rapport à la pédale 8B, comme illustré par une double flèche 51 ;
- le galet 44 roule sur la piste de roulement 45 de la pédale 8B et pousse la pédale 8B, ce qui crée un mouvement de rotation de la pédale 8B autour de son axe de rotation 28.

Le système de réglage 11 est un système indépendant et électrique, qui est commandé directement par l'utilisateur du palonnier 1.

Le système de réglage 11 permet ainsi de modifier une inclinaison neutre de la pédale associée. L'inclinaison neutre d'une pédale est l'inclinaison de la pédale lorsque le pilote n'appuie pas sur cette dernière. Ce système de réglage 11 permet ainsi d'adapter l'inclinaison à la taille du pilote qui devra l'utiliser.

Dans les architectures futures de cabine de pilotage, on envisage l'usage d'écrans tactiles sur les planches de bord, et une ergonomie de travail sur ces écrans, suivant la morphologie des pilotes (principalement la longueur des bras). Jusqu'à présent, les pilotes étaient positionnés, quelle que soit leur taille, à un endroit précis de la cabine de pilotage. A l'avenir, on prévoit de positionner les pilotes suivant leur taille (à une distance donnée des écrans, pour assurer une bonne ergonomie de travail) et leur oeil sera positionné suivant une ligne bien déterminée. La conséquence de cette évolution, est qu'entre un grand pilote et un petit pilote, la distance entre le positionnement de leurs pieds est réduite de moitié, par rapport à un positionnement usuel. En conséquence, les palonniers usuels ne sont pas compatibles avec ce mode de positionnement des pilotes, car ils n'assurent pas l'angle optimal de positionnement des pédales par rapport aux pieds de l'utilisateur suivant leur taille. Cet effet est amplifié par le fait que la nouvelle génération de pilote présente un écart de taille encore plus important que la génération actuelle. Le système de réglage 11, tel que décrit ci-dessus, permet de remédier à cet inconvénient.

Le supplément de variation de l'angle d'inclinaison β de la pédale 8A, 8B obtenu par le système de réglage 11 est, à titre d'illustration, de l'ordre de 10° (+/- 5°). Cette valeur peut être plus importante si nécessaire.

Les principaux avantages obtenus sont :
- un meilleur confort dû à la plus grande variation d'angle des pédales 8A, 8B ; et
- la possibilité d'un réglage différencié si souhaité, entre la pédale 10B gauche et la pédale 10A droite du palonnier 1.

De plus grâce à la motorisation (motoréducteur 39) du système de réglage 11, via de préférence un réglage électrique, le pilote n'a pas à réaliser manuellement le réglage de la position des pédales. Ceci permet de réduire sa charge de travail et augmente son confort dans le cadre de sa mise en relation avec le poste de pilotage lors de sa prise de fonction.

Le système de réglage 11 est pourvu de l'unité de commande 52 qui est configurée pour commander la motorisation commandable (motoréducteur 39) du système de réglage 11, comme illustré très schématiquement sur la figure 9 par une liaison 55 en trait mixte. L'unité de commande 52 active le fonctionnement du système de réglage 11, pour qu'il génère un déplacement des pédales 8A, 8B, dans l'un ou l'autre des sens possibles.

Dans un mode de réalisation simplifié, l'unité de commande 52 comprend un élément de commande apte à être actionné par un opérateur. Il peut s'agir d'un bouton ou d'un autre organe mécanique. L'élément de commande peut également être une télécommande qui permet de commander le système de réglage 11 à distance, par exemple lorsque le pilote est assis sur son siège dans une position appropriée concernant notamment son champ de vision.

En outre, en variante ou en complément, l'unité de commande 52 peut comporter un système de commande automatisé comprenant une mémoire, cette mémoire contenant une liste de positions prédéterminées des pédales. Le système de commande automatisé est configuré pour pouvoir amener automatiquement les pédales dans l'une des positions prédéterminées de ladite liste, qui a été sélectionnée. Cette sélection peut être réalisée par le pilote via un bouton rotatif ou tout autre moyen de sélection, ou par une télécommande. Dans une variante avantageuse, l'unité de commande comprend, de plus, un système de reconnaissance de pilote configuré pour reconnaître au moins un pilote particulier. Dans ce cas, le système de commande automatisé est configuré pour amener les pédales dans une position prédéterminée associée au pilote ainsi reconnu par le système de reconnaissance de pilote.

Dans un mode de réalisation préféré, le motoréducteur 39 du système de réglage 11 est installé dans un logement 53, comme représenté sur la figure 14, qui est prévu dans la partie basse de la pédale 8B. Dans le mode de réalisation des figures 13 et 14, le capteur de la position 32 et le motoréducteur 39 sont installés dans deux logements 35 et 53 adjacents.

Cette position du motoréducteur 39 en partie basse de la pédale 8B, permet une extraction rapide de ce composant (par l'arrière) en cas de panne de ce dernier.

Par ailleurs, dans un mode de réalisation particulier, chaque pédale, comme la pédale 8B représentée sur la figure 14, est pourvue d'une trappe d'accès 54. Cette trappe d'accès 54 permet d'accéder au logement 53. La trappe d'accès 54 est agencée sur la face arrière 37 (d'appui) de la pédale 8B, destinée à servir d'appui pour un pied d'un pilote en vue de l'actionnement de la pédale 8B.

Dans ce mode de réalisation particulier, le module à pédale 10A, 10B comporte, de préférence, un système d'extraction automatique (non représenté). Ce système d'extraction automatique est configuré pour générer une extraction automatique du motoréducteur 39 installé dans le logement 53, à l'ouverture de la trappe d'accès 54 du logement 53, par exemple par l'intermédiaire d'une connexion électrique usuelle existant sur une baie (« rack » en anglais).

Ainsi, dès l'ouverture de la trappe d'accès 54, le motoréducteur 39, est extrait de son logement 53, comme représenté sur la figure 14. Un opérateur n'a alors qu'à le saisir, par exemple pour le remplacer par un motoréducteur opérationnel s'il est défectueux.

Le module à pédale 10A, 10B, tel que décrit ci-dessus, présente notamment les caractéristiques suivantes :
- une mobilité de l'ensemble du module à pédale 10A, 10B qui est assurée par les patins 17 à recirculation de billes qui coopèrent avec des rails de guidage 15 (rectilignes courts), directement montés sur le module central 9 ;
- un démontage très rapide de l'ensemble du module à pédale 10A, 10B pour des opérations de maintenance notamment ;
- une intégration dans le module à pédale 10A, 10B de l'ensemble des fonctionnalités de freinage ;
- une structure porteuse 25 monobloc ;
- une protection des éléments sensibles par le soufflet de protection 26 (intégral) anti-agents contaminants ; et
- une possibilité d'extraction rapide de composants, nécessitant une maintenabilité rapide (capteur de position 32, motoréducteur 39).

Le module à pédale 10A, 10B et le palonnier 1, tels que décrits ci-dessus, présentent ainsi de nombreux avantages. En particulier :
- ils sont compacts ;
- ils sont simples ;
- ils sont légers ;
- ils présentent une maintenabilité aisée et optimisée suivant la nature des composants ;
- ils sont robustes ; et
- ils présentent des coûts réduits.

## Revendications

1. Module à pédale pour un palonnier d'aéronef, ledit module à pédale (10A, 10B) comportant une unique pédale (8A, 8B), le module à pédale (10A, 10B) étant destiné à être agencé sur un module central (9) du palonnier (1),
**caractérisé en ce qu'**il est monobloc et comporte, de plus, au moins un système de réglage (11) intégré permettant de modifier une inclinaison neutre de la pédale (8A, 8B), ainsi qu'un dispositif de liaison (12) permettant de réaliser une liaison amovible dudit module à pédale (10A, 10B).

2. Module à pédale selon la revendication 1,
**caractérisé en ce qu'**il comporte, de plus, un système de freinage (27) intégré.

3. Module à pédale selon la revendication 2,
**caractérisé en ce que** le système de freinage (27) comprend un capteur de position (32) configuré pour mesurer une rotation de la pédale (8A, 8B) lors d'une action de freinage.

4. Module à pédale selon la revendication 3,
**caractérisé en ce que** le capteur de position (32) est installé dans un premier logement (35) agencé dans une partie basse de la pédale (8A, 8B).

5. Module à pédale selon l'une quelconque des revendications précédentes,
**caractérisé en ce que** le système de réglage (11) est apte à être commandé et est configuré pour permettre le réglage d'un angle d'inclinaison (β) de la pédale (8A, 8B).

6. Module à pédale selon la revendication 5,
**caractérisé en ce que** le système de réglage (11) comporte un motoréducteur (39) apte à être commandé.

7. Module à pédale selon la revendication 6,
**caractérisé en ce que** le système de réglage (11) comporte une vis (40) apte à être mise en rotation par le motoréducteur (32), ladite vis (40) agissant sur un écrou (42) configuré pour basculer un guignol (43) lors de la rotation de la vis (40), le guignol (43) étant pourvu d'un galet (44) agencé de manière à être en contact d'une piste de roulement (45) formée sur la pédale (8A) et à pousser la pédale (8B) lors d'un basculement du guignol (43) pour modifier son inclinaison.

8. Module à pédale selon l'une des revendications 6 et 7,
**caractérisé en ce que** le motoréducteur (39) est installé dans un second logement (53) agencé dans une partie basse de la pédale (8B).

9. Module à pédale selon l'une des revendications 4 et 8,
**caractérisé en ce que** la pédale (8B) est pourvue d'au moins une trappe d'accès (36, 54) permettant d'accéder à au moins l'un des premier et second logements (35, 53), ladite trappe d'accès (36, 54) étant agencée sur une face d'appui (37) de la pédale (8B), destinée à servir d'appui pour un pied d'un pilote.

10. Module à pédale selon la revendication 9,
**caractérisé en ce qu'**il comporte au moins un système d'extraction automatique configuré pour extraire automatiquement un élément (32, 39) installé dans le logement (35, 53), à l'ouverture de la trappe d'accès (36, 54) de ce logement (35, 53).

11. Module à pédale selon l'une quelconque des revendications précédentes,
**caractérisé en ce qu'**il comporte une structure porteuse (25) monobloc creuse, sur laquelle est montée de façon rotative la pédale (8A, 8B).

12. Module à pédale selon la revendication 11,
**caractérisé en ce qu'**il comporte un soufflet de protection (26) agencé entre la pédale (8A, 8B) et la structure porteuse (25).

13. Palonnier pour un aéronef,
**caractérisé en ce qu'**il comporte au moins un module à pédale (10A, 10B) tel que celui spécifié sous l'une quelconque des revendications 1 à 12.

14. Palonnier selon la revendication 13,
**caractérisé en ce qu'**il comporte au moins un module central (9) et deux modules à pédale (10A, 10B), les modules à pédale (10A, 10B) étant agencés de part et d'autre dudit module central (9), chacun desdits modules à pédale (10A, 10B) étant agencé sur une face latérale (13, 14) associée du module central (9).

15. Palonnier selon la revendication 14,
**caractérisé en ce que** le module central (9) est pourvu, sur chacune des faces latérales (13, 14), de rails de guidage (15) configurés pour coopérer avec des patins (17) à recirculation de billes, fixés sur le module à pédale (10A, 10B) associé et faisant partie dudit dispositif de liaison (12).

16. Palonnier selon l'une des revendications 14 et 15,
**caractérisé en ce que** le module central (9) est pourvu, sur chacune des faces latérales (13, 14), d'un bras (21), chacun desdits bras (21) étant lié de façon articulée à une biellette de poussée (23) du module à pédale (10A, 10B) correspondant, le bras (21) et la biellette de poussée (23) étant configurés pour assurer la transmission d'un mouvement de la pédale (8A, 8B) dudit module de pédale (10A, 10B).

17. Aéronef,
**caractérisé en ce qu'**il comporte un palonnier (1) tel que celui spécifié sous l'une quelconque des revendications 13 à 16.

## Patentansprüche

1. Pedalmodul für eine Seitenrudersteuerung eines Luftfahrzeugs, wobei das Pedalmodul (10A, 10B) ein einziges Pedal (8A, 8B) umfasst, wobei das Pedalmodul (10A, 10B) dazu bestimmt ist, auf einem zentralen Modul (9) der Seitenrudersteuerung (1) angeordnet zu werden,
**dadurch gekennzeichnet, dass** es Monoblock ist und weiter mindestens ein integriertes Einstellsystem (11) umfasst, das es erlaubt, eine neutrale Neigung des Pedals (8A, 8B) zu ändern, sowie eine Verbindungsvorrichtung (12), die es erlaubt, eine abnehmbare Verbindung des Pedalmoduls (10A, 10B) auszuführen.

2. Pedalmodul nach Anspruch 1,
**dadurch gekennzeichnet, dass** es weiter ein integriertes Bremssystem (27) umfasst.

3. Pedalmodul nach Anspruch 2,
**dadurch gekennzeichnet, dass** das Bremssystem (27) einen Positionsfühler (32) umfasst, der dazu konfiguriert ist, eine Drehung des Pedals (8A, 8B) bei einer Bremsaktion zu messen.

4. Pedalmodul nach Anspruch 3,
**dadurch gekennzeichnet, dass** der Positionsfühler (32) in einer ersten Aufnahme (35), die in einem unteren Teil des Pedals (8A, 8B) eingerichtet ist, installiert ist.

5. Pedalmodul nach einem der vorstehenden Ansprüche, **dadurch gekennzeichnet, dass** das Einstellsystem (11) geeignet ist, um gesteuert zu werden, und dazu konfiguriert ist, um das Einstellen eines Neigungswinkels (ß) des Pedals (8A, 8B) zu erlauben.

6. Pedalmodul nach Anspruch 5,
**dadurch gekennzeichnet, dass** das Einstellsystem (11) einen Getriebemotor (39) umfasst, der dazu geeignet ist, um gesteuert zu werden.

7. Pedalmodul nach Anspruch 6,
**dadurch gekennzeichnet, dass** das Einstellsystem (11) eine Schraube (40) umfasst, die dazu geeignet ist, um von dem Getriebemotor (32) in Drehung versetzt zu werden, wobei die Schraube (40) auf eine Mutter (42) einwirkt, die dazu konfiguriert ist, um einen Umlenkhebel (43) bei der Drehung der Schraube (40) zu kippen, wobei der Umlenkhebel (43) mit einer Walze (44) versehen ist, die dazu eingerichtet ist, mit einer Lauffläche (45), die auf dem Pedal (8A) gebildet ist, in Berührung zu sein und das Pedal (8B) bei einem Kippen des Umlenkhebels (43) zu schieben, um seine Neigung zu ändern.

8. Pedalmodul nach einem der Ansprüche 6 und 7,
**dadurch gekennzeichnet, dass** der Getriebemotor (39) in einer zweiten Aufnahme (53), die in einem unteren Teil des Pedals (8B) angeordnet ist, installiert ist.

9. Pedalmodul nach einem der Ansprüche 4 und 8,
**dadurch gekennzeichnet, dass** das Pedal (8B) mit mindestens einer Zugangsklappe (36, 54) versehen ist, die es erlaubt, zu mindestens einer der ersten und der zweiten Aufnahme (35, 53) Zugang zu erhalten, wobei die Zugangsklappe (36, 54) auf einer Auflagefläche (37) des Pedals (8B), die dazu bestimmt ist, als Auflage für einen Fuß eines Piloten zu dienen, angeordnet ist.

10. Pedalmodul nach Anspruch 9,
**dadurch gekennzeichnet, dass** es mindestens ein automatisches Extraktionssystem umfasst, das dazu konfiguriert ist, um ein Element (32, 39), das in der Aufnahme (35, 53) installiert ist, bei dem Öffnen der Zugangsklappe (36, 54) dieser Aufnahme (35, 53) automatisch zu extrahieren.

11. Pedalmodul nach einem der vorstehenden Ansprüche, **dadurch gekennzeichnet, dass** es eine hohle Monoblock-Tragstruktur (25), auf der das Pedal (8A, 8B) drehend montiert ist, umfasst.

12. Pedalmodul nach Anspruch 11,
**dadurch gekennzeichnet, dass** es einen Schutzbalg (26) umfasst, der zwischen dem Pedal (8A, 8B) und der Tragstruktur (25) angeordnet ist.

13. Seitenrudersteuerung für ein Luftfahrzeug,
**dadurch gekennzeichnet, dass** sie mindestens ein Pedalmodul (10A, 10B), wie das in einem der Ansprüche 1 bis 12 spezifizierte, umfasst.

14. Seitenrudersteuerung nach Anspruch 13,
**dadurch gekennzeichnet, dass** sie mindestens ein zentrales Modul (9) und zwei Pedalmodule (10A, 10B) umfasst, wobei die Pedalmodule (10A, 10B) beiderseits des zentralen Moduls (9) angeordnet sind, wobei jedes der Pedalmodule (10A, 10B) auf einer Seitenfläche (13, 14), die zu dem zentralen Modul (9) gehört, angeordnet ist.

15. Seitenrudersteuerung nach Anspruch 14,
**dadurch gekennzeichnet, dass** das zentrale Modul (9) auf jeder der Seitenflächen (13, 14) mit Führungsschienen (15) versehen ist, die dazu konfiguriert sind, um mit Kugellaufkufen (17), die auf dem zugehörigen Pedalmodul (10A, 10B) montiert und Teil der Verbindungsvorrichtung (12) sind, zusammenzuwirken.

16. Seitenrudersteuerung nach einem der Ansprüche 14 und 15,
**dadurch gekennzeichnet, dass** das zentrale Modul (9) auf jeder der Seitenflächen (13, 14) mit einem Arm (21) versehen ist, wobei jeder der Arme (21) gelenkig mit einem Schubgestänge (23) des entsprechenden Pedalmoduls (10A, 10B) verbunden ist, wobei der Arm (21) und das Schubgestänge (23) dazu konfiguriert sind, um für die Übertragung einer Bewegung von dem Pedal (8A, 8B) des Pedalmoduls (10A, 10B) zu sorgen.

17. Luftfahrzeug,
**dadurch gekennzeichnet, dass** es eine Seitenrudersteuerung (1) wie die, die in einem der Ansprüche 13 bis 16 spezifiziert ist, umfasst.

## Claims

1. A pedal module for an aircraft rudder bar, said pedal module (10A, 10B) comprising a single pedal (8A, 8B), the pedal module (10A, 10B) being intended to be arranged on a central module (9) of the rudder bar (1),
**characterized in that** it is monobloc and further comprises at least one integrated adjustment system (11) which enables neutral inclination of the pedal (8A, 8B) to be modified, as well as a connection device (12) which enables a removable connection of the pedal module (10A, 10B) to be produced.

2. The pedal module as claimed in claim 1,
**characterized in that** it further comprises an integrated braking system (27).

3. The pedal module as claimed in claim 2,
**characterized in that** the braking system (27) comprises a position sensor (32) which is configured to measure a rotation of the pedal (8A, 8B) during a braking action.

4. The pedal module as claimed in claim 3,
**characterized in that** the position sensor (32) is installed in a first housing (35) which is arranged in a lower portion of the pedal (8A, 8B).

5. The pedal module as claimed in any of the preceding claims, **characterized in that** the adjustment system (11) is capable of being controlled and is configured to enable the inclination angle (β) of the pedal (8A, 8B) to be adjusted.

6. The pedal module as claimed in claim 5,
**characterized in that** the adjustment system (11) comprises a geared motor (39) which is capable of being controlled.

7. The pedal module as claimed in claim 6,
**characterized in that** the adjustment system (11) comprises a screw (40) which is capable of being rotated by the geared motor (32), the screw (40) acting on a nut (42) which is configured to tilt a bellcrank (43) during the rotation of the screw (40), the bellcrank (43) being provided with a roller (44) which is arranged so as to be in contact with a roller track (45) which is formed on the pedal (8A) and to push the pedal (8B) when the bellcrank (43) is tilted in order to modify the inclination thereof.

8. The pedal module as claimed in any of claims 6 and 7,
**characterized in that** the geared motor (39) is installed in a second housing (53) which is arranged in a lower portion of the pedal (8B).

9. The pedal module as claimed in any of claims 4 and 8,
**characterized in that** the pedal (8B) is provided with at least one access hatch (36, 54) which affords access to at least one of the first and second housings (35, 53), the access hatch (36, 54) being arranged on a support face (37) of the pedal (8B) which is intended to act as a support for a foot of a pilot.

10. The pedal module as claimed in claim 9,
**characterized in that** it comprises at least one automatic extraction system which is configured to automatically extract an element (32, 39) which is installed in the housing (35, 53) in the event of the opening of the access hatch (36, 54) of this housing (35, 53).

11. The pedal module as claimed in any of the preceding claims,
**characterized in that** it comprises a hollow monobloc carrier structure (25) on which the pedal (8A, 8B) is rotatably mounted.

12. The pedal module as claimed in claim 11,
**characterized in that** it comprises a protection bellows (26) which is arranged between the pedal (8A, 8B) and the carrier structure (25).

13. A rudder bar for an aircraft,
**characterized in that** it comprises at least one pedal module (10A, 10B) as specified in any of claims 1 to 12.

14. The rudder bar as claimed in claim 13,
**characterized in that** it comprises at least one central module (9) and two pedal modules (10A, 10B), the pedal modules (10A, 10B) being arranged at one side and the other of the central module (9), each of the pedal modules (10A, 10B) being arranged on an associated lateral face (13, 14) of the central module (9).

15. The rudder bar as claimed in claim 14,
**characterized in that** the central module (9) is provided on each of the lateral faces (13, 14) with guide rails (15) which are configured to cooperate with recirculating ball bearing tracks (17) which are fixed to the associated pedal module (10A, 10B) and which form part of the connection device (12).

16. The rudder bar as claimed in any of claims 14 and 15,
**characterized in that** the central module (9) is provided on each of the lateral faces (13, 14) with an arm (21), each of the arms (21) being connected in an articulated manner to a push rod (23) of the corresponding pedal module (10A, 10B), the arm (21) and the push rod (23) being configured to ensure the transmission of a movement of the pedal (8A, 8B) of the pedal module (10A, 10B).

17. An aircraft,
**characterized in that** it comprises a rudder bar (1) as specified in any of claims 13 to 16.
